(19) Europäisches Patentamt
European Patent Office
Office européen des brevets

(11) Publication number: 0 051 311
B1

(12) EUROPEAN PATENT SPECIFICATION

(45) Date of publication of patent specification: 08.07.87

(21) Application number: 81109480.4

(22) Date of filing: 02.11.81

(51) Int. Cl.[4]: **C 08 G 59/24,** C 08 G 59/42, C 08 L 63/00, C 08 G 59/62 // C08G59/18

# (54) Curable one-phase composition.

(30) Priority: 03.11.80 US 203440

(43) Date of publication of application: 12.05.82 Bulletin 82/19

(45) Publication of the grant of the patent: 08.07.87 Bulletin 87/28

(84) Designated Contracting States: AT BE CH DE FR GB IT LI NL SE

(56) References cited:
DE-A-1 595 404
DE-B-2 035 620
US-A-3 169 945

Chemical Abstracts vol. 81, no. 15 14 October 1974 Columbus, Ohio, USA A.S. BURHANS "Improved liquid cycloaliphatic epoxy casting systems" page 31, column 1, abstract no. 92364v

(73) Proprietor: UNION CARBIDE CORPORATION
39 Old Ridgebury Road
Danbury Connecticut 06817 (US)

(72) Inventor: Burhans, Allison Stillwell
1387 Ochoco Avenue
Prineville Oregon 97754 (US)
Inventor: Spurr, Orson Kirk, Jr.
1270 Cornell Road
Bridgewater New Jersey 08807 (US)

(74) Representative: Wuesthoff, Franz, Dr.-Ing. et al
*Patentanwälte Wuesthoff -v. Pechmann-*
Behrens-Goetz Schweigerstrasse 2
D-8000 München 90 (DE)

(56) References cited:
Chemical Abstracts vol. 83, no. 17 27 October 1975 Columbus, Ohio, USA A.S. BURHANS "High-performance cycloaliphatic epoxide systems for electrical casting" page 39, column 2, abstract no. 148241p

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 051 311 B1

Courier Press, Leamington Spa, England.

**Description**

This invention is directed to a curable composition of a cycloaliphatic epoxide and a compatible amount of propylene oxide adducts of polyhydroxyalkanes.

Cycloaliphatic epoxide resins have inherently good electrical properties. Unmodified cycloaliphatic epoxide resins when cured, however, produce inherently brittle materials. Thus, modifications must be made in the cycloaliphatic epoxide resin systems to decrease their brittleness as well as provide tough systems in order to provide the necessary thermal shock resistance (TSR). Also, resin systems with good electrical properties at elevated temperatures are required in many applications.

The problem, then, becomes one of developing cycloaliphatic epoxide systems with adequate thermal shock resistance while retaining their excellent electrical properties and high heat distortion temperature.

Modification of the cycloaliphatic epoxides with low (<1000) molecular weight flexibilizers showed an averaging effect between the softening point of the unmodified resin and that of the flexibilizer. The result was a moderate improvement in the TSR accompanied by a rather large reduction in the heat distortion temperature.

Thus, a need exists to develop a cycloalphatic epoxide system with a high TSR, a high heat distortion temperature which retains the excellent electrical properties of the systems.

The US—A—31 69 954 describes the use of polycaprolactone polyols as plasticizers for vinyl halide resins. Polycaprolactone polyols are not crosslinkable with vinyl halide resins. DE—B—20 35 620 merely indicates that it is known to employ polyols in order to improve the flexibility of epoxy compositions. Said prior art discloses curable compositions on the basis of polyepoxides in the form of a mixture with a polycarboxylic acid anhydride as curing agent and a linear polymer of a cylic ester with terminal hydroxyl groups, which may contain in the chain, apart from an ether bond, also a sulfo bond or an optionally substituted amino group. These curable compositions can moreover contain a curing catalyst, an inorganic filler and a silane coupling agent. Finally, it has been known from Chemical Abstract *83* (1975), 148241p and *81* (1974), 92364v to add hexanetriol-propylene oxide reaction products having molecular weights of 725 and 500, respectively, to obtain high-performance cycloaliphatic epoxide systems for electrical casting, said addition toughening both filled and unfilled thermal shock-resistant epoxy resins.

The curable compositions according to the invention, when cast into articles, are characterized by an excellent balance of physical properties, high TSR, high heat distortion temperature and good electrical properties.

The compositions of this invention are useful in making electrical components such as, for example, outdoor insulation applications and coil and transformer encapsulation.

The curable one-phase composition of this invention comprises a cycloaliphatic epoxide having an average of more than 1 vicinal epoxy group per molecule and a polyol being a propylene oxide adduct of polyhydroxyalkanes of the formula

$$R_{10}\!\left[\!-O\!\left(\!-CH_2-\underset{\displaystyle CH_3}{\underset{|}{CH}}-O\!-\right)_{\!n}H\right]_3$$

wherein $R_{10}$ is an alkyl group of 3 to 10 carbon atoms and n is an integer of from 4 to 25 and having a molecular weight of 1000 to 4000 in amount of 10 to 25 weight percent — based on the total weight of the composition, i.e. compositions which does not form a two phase system with the epoxide.

The epoxy groups can be terminal epoxy groups or internal epoxy groups as exemplified by the cycloaliphatic epoxides which are subsequently described. Particularly desirable cycloaliphatic epoxides are the cyclohexane diepoxides, that is epoxides having at least one cyclohexane ring to which is attached at least one vicinal epoxy group.

Illustrative of suitable cycloaliphatic epoxides are the following:

Formula I

Diepoxides of cycloaliphatic esters of dicarboxylic acids having the formula:

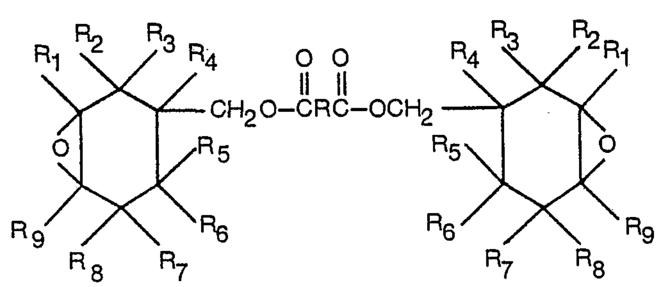

wherein $R_1$ through $R_9$, which can be the same or different are hydrogen or alkyl radicals containing 1 to 9

carbon atoms and preferably containing 1 to 3 carbon atoms as for example methyl, ethyl, n-propyl, n-butyl, n-hexyl, 2-ethylhexyl, n-octyl, and n-nonyl;

R is a valence bond or a divalent hydrocarbon radical containing 1 to 9 carbon atoms and preferably containing 4 to 6 carbon atoms as for example, alkylene radicals, such as trimethylene, tetramethylene, pentamethylene, hexamethylene, 2-ethylhexamethylene, octamethylene, nonamethylene; cycloaliphatic radicals, such as 1,4-cyclohexane, 1,3-cyclohexane, and 1,2-cyclohexane.

Particularly desirable epoxides, falling within the scope of Formula I, are those wherein $R_1$ through $R_9$ are hydrogen and R is alkylene containing 4 to 6 carbon atoms.

Among specific diepoxides of cycloaliphatic esters of dicarboxylic acids are the following:

bis(3,4-epoxycyclohexylmethyl)oxalate,
bis(3,4-epoxycyclohexylmethyl)adipate,
bis(3,4-epoxy-6-methylcyclohexylmethyl)adipate,
bis(3,4-epoxycyclohexylmethyl)pimelate.

Other suitable compounds are described in US—A—2,750,395.

Formula II

A 3,4-epoxycyclohexylmethyl 3,4-epoxycyclohexane carboxylate having the formula:

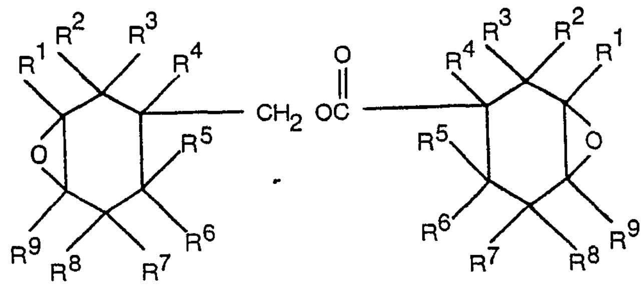

wherein $R^1$ to $R^9$ which can be the same or different are as defined for $R_1$ in formula I. Particularly desirable compounds are those wherein $R^1$ to $R^9$ are hydrogen.

Among specific compounds falling within the scope of Formula II are the following: 3,4-epoxycyclohexylmethyl-3,4-epoxycyclohexanecarboxylate, 3,4-epoxy-1-methylcyclohexylmethyl-3,4-epoxy-1-methylcyclohexylmethyl-3,4-epoxy-1-methylcyclohexanecarboxylate, 6-methyl-3,4-epoxycyclohexylmethyl, 6-methyl-3,4-epoxycyclohexanecarboxylate, 3,4-epoxy-3-methylcyclohexylmethyl, 3,4-epoxy-3-methylcyclohexanecarboxylate, 3,4-epoxy-5-methylcyclohexylmethyl, 3,4-epoxy-5-methylcyclohexanecarboxylate. Other suitable compounds are described in US—A—2,890,194.

Formula III

Diepoxides having the formula:

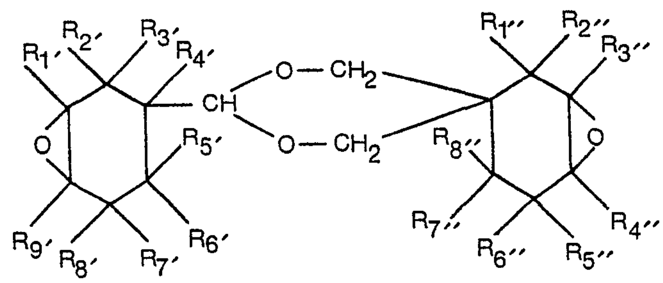

wherein the R single and double primes, which can be the same or different, are monovalent substituents such as hydrogen, halogen, i.e. chlorine, bromine, iodine or fluorine, or monovalent hydrocarbon radicals, or radicals as further defined in US—A—3,318,822.

Particularly desirable compounds are those wherein all the R's are hydrogen.

Other suitable cycloalphatic epoxides are the following:

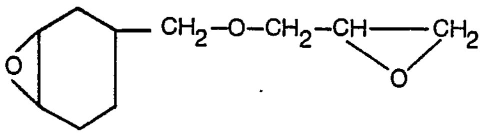

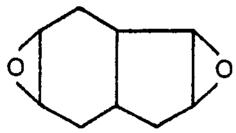

The preferred cycloalphatic epoxides are the following:
3,4-Epoxycyclohexylmethyl-3,4-Epoxycyclohexane carboxylate

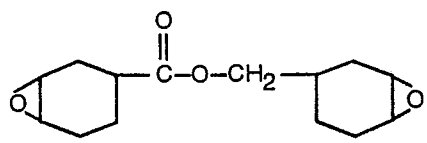

Bis-(3,4-Epoxycyclohexylmethyl)Adipate

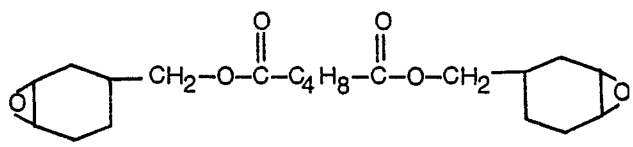

2-(3,4-Epoxycyclohexyl-5,5-spiro-3,4-epoxy)cyclohexane-meta-dioxane

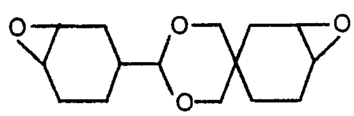

Vinyl cyclohexene Dioxide

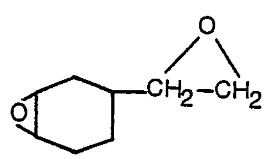

or mixtures thereof.

Epoxides with 6 membered ring structures may also be used, such as diglycidyl esters of phthalic acid, partially hydrogenated phthalic acid or fully hydrogenated phthalic acid. Diglycidyl esters of hexahydrophthalic acids being preferred.

Illustrative alkylene oxide adducts of polyhydroxyalkanes include the propylene oxide adducts of glycerol, 1,2,4-trihydroxybutane, 1,2,6-trihydroxyhexane, 1,1,1-trimethylolpropane.

The preferred alkylene oxide adducts of polyhydroxyalkanes are of the following formula:

$$R_{10}[-O(-CH_2-\underset{\displaystyle CH_3}{\underset{|}{CH}}-O)_nH]_3$$

wherein $R_{10}$ is alkyl, 3 carbon atoms, and n is an integer of from 4 to 25.

The adduct constitutes preferably from 10 to 20 weight percent.

It is customary to add appropriate hardeners to epoxide compositions to effect cure.

Among suitable hardeners are the following:

1. phenolic hardeners having at least 2 phenolic hydroxyl groups and preferably having at least 3 phenolic hydroxyl groups per molecule.

2. polybasic acids having at least 2 carboxylic acid groups per molecule.

3. anhydrides of acids having at least 2 carboxylic acid groups per molecule.

Exemplary of suitable phenolic hardeners are the following polyhydric phenols: catechol, hydroquinone, hydroxyhydroquinone, phloroglucinol, resorcinol and pyrogallol; the di and polynuclear phenols such as the bisphenol is described in US—A—2,506,486 and polyphenylols such as novolac condensates of a phenol and a saturated or unsaturated aldehyde containing an average of from 3 to 20 or more phenylol groups per molecule (cf. T. S. Carswell "Phenoplasts", published in 1947 by Interscience Publishers of New York).

Examples of suitable polyphenylols derived from a phenol and an unsaturated aldehyde such as acrolein are the triphenylols, pentaphenylols and heptaphenylols described in US—A—2,885,385.

The phenols may contain alkyl or aryl ring substituents or halogens, as exemplified by the alkyl resorcinols, the tribromo resorcinol and the diphenols containing alkyl and halogen substituents on the aromatic ring (US—A—2,506,486).

The polyhydric phenols can consist of two or more phenols connected by such groups as methylene, alkylene ether, ketone, or sulfone. The connecting groups are further exemplified by the following compounds: bis(p-hydroxyphenyl)ether, bis(p-hydroxyphenyl)ketone, bis(p-hydroxyphenyl)methane, bis(p-hydroxyphenyl)dimethyl methane and bis(p-hydroxyphenyl)sulfone.

For purposes of stoichiometric calculations with respect to phenolic hardeners, one phenolic hydroxyl group is deemed to react with one epoxy group.

Illustrative of suitable polybasic acids are the polycarboxylic acids of the formula:

$$HOOC—(CH_2)_f—COOH$$

wherein f is an integer generally having a value of from 1 to 20 as for example, malonic, glutaric, adipic, pimelic, suberic, azelaic, and sebacic.

Other examples of suitable acids are phthalic acid, isophthalic acid and terephthalic acid.

Further acids are enumerated in US—A—2,918,444.

Among other suitable polybasic acids, having at least two carboxylic groups per molecule, can be noted the following: tricarballylic acid and timellitic acid. Other such suitable polybasic acids, including polyesters thereof, are described in US—A—2,921,925.

Suitable anhydrides are the anhydrides of the acids listed above.

For purposes of stoichiometric calculations with respect to acids, one carboxylic group is deemed to react with one epoxy group; with respect to anhydrides, one anhydride group is deemed to react with one epoxy group.

Preferred hardeners include methyltetrahydrophthalic anhydride, hexahydrophthalic anhydride and methylhexahydrophthalic anhydride.

In an embodiment of this invention, the hardener such as the anhydride may be reacted with the adduct and this reacted product added to the epoxide.

It is to be understood that other additives can be added to the compositions of this invention as is well known in the epoxy art. These additives include the following: catalysts or accelerators, such as amines including (2-hydroxy ethyl)trimethyl ammonium hydroxide (45 percent concentration in methanol, known as choline base, benzyl dimethyl amine, 2-methyl imidazole, metallic compounds, such as stannous octanoate, peroxides or ethylene glycol; modifiers such as dimer acid (made from unsaturated $C_{18}$ fatty acids and is a mixture of 3 percent mono basic acids, 75 percent dimer acid and 22 percent trimer acid and sold under the name of Empol 1022® by Emery Industries), a carboxyl terminated butadiene acrylonitrile (80—20) random copolymer having a molecular weight of about 3300; fillers such as clay, silica or aluminum trihydride which may be coated with, for example, silanes, which fillers may be added in amounts of up to about 60 percent; pigments such as carbon black; mold release agents.

The compositions of this invention are prepared by simply mixing the epoxide, adduct, hardener and other ingredients at room or higher temperatures in a suitable container. Also, the epoxide and adduct may be mixed in one container and the hardener, catalyst and/or accelerator in another container and these two mixed. This blend is then heated in order to effect its cure. The temperature to which the composition of this invention are heated to effect cure will, of course, vary and depend, in part upon the exact formulations of the composition. Generally, temperatures in the range of 100°C to 200°C are used for a period of time ranging from 1 to 6 h.

## Examples

The following designations used in the Examples have the following meaning:

Epoxy 1: 3,4-epoxycyclohexylmethyl-3,4-epoxycyclohexane carboxylate

Epoxy 2: bis(3,4-epoxycyclohexylmethyl)adipate

Epoxy 3: 2-(3,4-epoxycyclohexyl-5,5-spiro-3,4-epoxy)cyclohexane-meta-dioxane

HHPA: hexahydrophthalic anhydride

MTHPA: methyltetrahydrophthalic anhydride

Choline base: (2-hydroxy ethyl)trimethyl ammonium hydroxide, 45 percent concentration in methanol.

$$\text{Polyol 1: } R[-O(-CH_2-\underset{\underset{\displaystyle CH_3}{|}}{CH}-O)_nH]_3$$

R = propyl having a molecular weight of 6000.

Polyol 2: same formula as Polyol 1 but having a molecular weight of 5,000.
Polyol 3: same formula as Polyol 1 but having a molecular weight of 4,200.
Polyol 4: same formula as Polyol 1 but having a molecular weight of 2,500.
Polyol 5: same formula as Polyol 1 but having a molecular weight of 1,500.
Polyol 6: same formula as Polyol 1 but having a molecular weight of 710.

The procedures used to test the cured composition were as follows:

| Physical Property | Test Method |
|---|---|
| Heat distortion temperature | ASTM D648—72 |
| Thermal shock resistance (TSR) | Union carbide Corporation Publication F—44429 |
| Tensile strength<br>Elongation at break<br>Tensile modulus | ASTM D—638 |
| Dielectric constant, 60 Hz at 100°C<br>Dissipation Factor, 60 Hz at 100°C | ASTM D—150 |

Examples 1 and 2 and Controls A to D

In these Examples and Controls, the type and amount of epoxide (grams) and type and amount of polyol (grams) as shown in Table I were mixed in a container at about 25°C. In a separate container the amount (grams) of hexahydrophthalic anhydride and the amount (grams) of choline base as shown in Table I were mixed at about 55°C. The contents of the 2 containers were combined and poured into appropriate molds. The contents of the molds were then heated for 2 hours at 100°C and then for 4 hours at 160°C.

The cured composition was then cut into test samples and tested for heat distortion temperature, TSR, tensile strength, elongation, tensile modulus, dielectric constant and dissipation factor. The appearance of the cured composition was noted. An appearance of opacity indicates that a second phase has been formed.

The results are shown in Table I.

TABLE I

| Example | Control A | Control B | Control C | 1 | 2 | Control D |
|---|---|---|---|---|---|---|
| Formulation | | | | | | |
| Epoxy 2 | 208 | 208 | 208 | 208 | 208 | 208 |
| Polyol 1 | 82.8 | — | — | — | — | — |
| Polyol 2 | — | 82.8 | — | — | — | — |
| Polyol 3 | — | — | 82.8 | — | — | — |
| Polyol 4 | — | — | — | 82.8 | — | — |
| Polyol 5 | — | — | — | — | 82.8 | — |
| Polyol 6 | — | — | — | — | — | 82.8 |
| HHPA | 123.2 | 123.2 | 123.2 | 123.2 | 123.2 | 123.2 |
| Choline base | 0.41 | 0.41 | 0.41 | 0.41 | 0.41 | 0.41 |
| Properties | | | | | | |
| Appearance | Opaque | Opaque | Opaque | Clear | Clear | Clear |
| Heat distortion temp. °C | 81.0 | 76.2 | 60.0 | 44.2 | 36.1 | ≥25 |
| TSR | 1 | 1 | 1 | 9.0 | 7.7 | 7.3 |
| Tensile strength $N/mm^2$ (psi) | 1.79 (260) | 12.0 (1740) | 21.86 (3170) | 19.52 (2830) | 17.65 (2560) | 22.62 (3280) |
| Elongation % | 0.38 | 1.95 | 44.0 | 55.0 | 65.0 | 97.0 |
| Tensile modulus $N/mm^2$ (psi) | 491 (71,200) | 724 (105,000) | 828 (120,000) | 626 (90,700) | 381 (55,200) | 548 (79,500) |
| Dielectric constant | 4.38 | 5.20 | 4.17 | 4.55 | 4.85 | 5.69 |
| Dissipation factor | 0.840 | 0.646 | 0.250 | 0.158 | 0.108 | 0.092 |

Examples 3 and 4 and Controls F to H

In these Examples and Controls, the type and amount of epoxide (grams) and type and amount of polyol (grams) as shown in Table II were mixed in a container at about 25°C. In a separate container the amount (grams) of hexahydrophthalic anhydride and the amount (grams) of choline base as shown in Table II were mixed at about 55°C. The contents of the two containers were combined and poured into appropriate molds. The contents of the molds were then heated for 2 hours at 100°C and then for four hours at 160°C.

The cured composition was then cut into test samples and tested for heat distortion temperature, TSR, tensile strength, elongation, tensile modulus, dielectric constant and dissipation factor. The appearance of the cured composition was noted.

The results are shown in Table II.

TABLE II

| Example | Control E | Control F | Control G | 3 | 4 | Control H |
|---|---|---|---|---|---|---|
| Formulation | | | | | | |
| Epoxy 1 | 140 | 140 | 140 | 140 | 140 | 140 |
| Polyol 1 | 65.8 | — | — | — | — | — |
| Polyol 2 | — | 65.8 | — | — | — | — |
| Polyol 3 | — | — | 65.8 | — | — | — |
| Polyol 4 | — | — | — | 65.8 | — | — |
| Polyol 5 | — | — | — | — | 65.8 | — |
| Polyol 6 | — | — | — | — | — | 65.8 |
| HHPA | 123.2 | 123.2 | 123.2 | 123.2 | 123.2 | 123.2 |
| Choline base | 0.33 | 0.33 | 0.33 | 0.33 | 0.33 | 0.33 |
| Properties | | | | | | |
| Appearance | Opaque | Opaque | Opaque | Clear | Clear | Clear |
| Heat distortion temp. °C | 107.2 | 128.9 | 119.2 | 100.1 | 90.1 | 80.3 |
| TSR | 6.5 | 4.5 | 3.1 | 4.9 | 4.7 | 3.0 |
| Tensile strength $N/mm^2$ (psi) | 31.24 (4530) | 34.83 (5050) | 33.59 (4870) | 36.67 (5320) | 44.07 (6390) | 59.86 (8680) |
| Elongation % | 5.61 | 5.21 | 3.78 | 5.34 | 4.11 | 2.9 |
| Tensile modulus $N/mm^2$ (psi) | 1.138 (165,000) | 1.310 (190,000) | 1.352 (196,000) | 1.476 (214,000) | 1.931 (280,000) | 2.772 (402,000) |
| Dielectric constant | 6.25 | 4.55 | 3.54 | 3.33 | 3.35 | 3.56 |
| Dissipation factor | 1.091 | 0.758 | 0.253 | 0.030 | 0.025 | 0.043 |

Examples 5 to 11

In these Examples, a mixture of epoxides of the type and amount (grams) and Polyol 4 in the amount (grams) as shown in Table III were mixed at about 25°C.

In a separate container the amount (grams) of hexahydrophthalic anhydride and the amount (grams) of choline base as shown in Table III were mixed at about 25°C. The contents of the two containers were combined and poured into appropriate molds. The contents of the mold were then heated for 3 hours at 100°C and then for four hours at 160°C.

The cured composition was then cut into test samples and tested for heat distortion temperature, TSR, tensile strength, elongation, tensile modulus, dielectric constant and dissipation factor. The appearance of the cured composition was noted.

The results are shown in Table III.

TABLE III

| Example | 5 | 6 | 7 | 8 | 9 | 10 | 11 |
|---|---|---|---|---|---|---|---|
| Formulation | | | | | | | |
| Epoxy 2 | 156 | 104 | 83.2 | 62.4 | 41.6 | 31.2 | 20.8 |
| Epoxy 3 | 35 | 70 | 84 | 98 | 112 | 119 | 126 |
| Polyol 4 | 83 | 83 | 72.6 | 70.9 | 69.2 | 68.4 | 67.5 |
| HHPA | 123.2 | 123.2 | 123.2 | 123.2 | 123.2 | 123.2 | 123.2 |
| Choline base | 0.40 | 0.40 | 3.6 | 3.5 | 3.5 | 3.4 | 3.4 |
| Properties | | | | | | | |
| Appearance | Clear | Clear | Clear | Clear | Clear | Clear | Clear |
| Heat distortion temp.°C | 53.2 | 68.7 | 76.6 | 88.4 | 96.9 | 109.5 | 115.7 |
| TSR | 11.1 | 8.0 | 9.7 | 6.7 | 7.3 | 7.3 | 6.9 |
| Tensile strength $N/mm^2$ (psi) | 24.69 (3580) | 29.24 (4240) | 32.34 (4690) | 35.31 (5120) | 39.38 (5710) | 39.45 (5720) | 41.31 (5990) |
| Elongation % | 49.0 | 39.0 | 26.0 | 15.2 | 19.5 | 15.0 | 18.0 |
| Tensile modulus $N/mm^2$ (psi) | 800 (116,000) | 1.055 (153,000) | 1.310 (190,000) | 1.345 (195,000) | 1.448 (210,000) | 1.469 (213,000) | 1.517 (220,000) |
| Dielectric constant | 3.96 | 3.63 | 3.62 | 3.56 | 3.42 | 3.53 | 3.35 |
| Dissipation factor | 0.065 | 0.049 | 0.082 | 0.097 | 0.098 | 0.118 | 0.130 |

**Claims**

1. A curable one-phase composition comprising a cycloaliphatic epoxide having an average of more than 1 vicinal epoxy group per molecule and 10 to 25 weight percent — based on the total weight of the composition — of a polyol being a propylene oxide adduct of polyhydroxyalkanes of the formula:

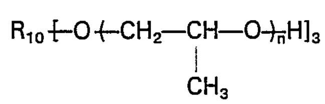

wherein $R_{10}$ is an alkyl group of 3 to 10 carbon atoms and n is an integer of from 4 to 25 and having a molecular weight of 1000 to 4000.

2. The composition of claim 1 wherein $R_{10}$ is propyl.

3. The composition of claim 1 or 2 wherein the cycloaliphatic epoxide has the formula:

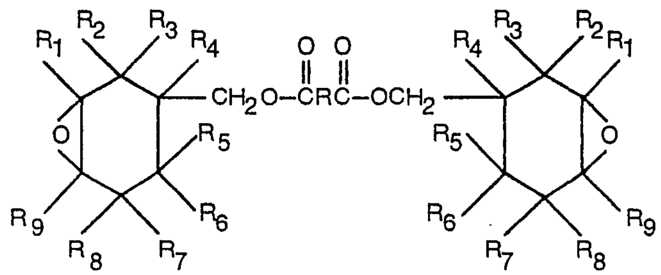

wherein $R_1$ to $R_9$, which can be the same or different are hydrogen or alkyl radicals containing 1 to 9 carbon atoms; R is a valence bond or a divalent hydrocarbon radical containing 1 to 9 carbon atoms.

4. The composition of claim 1 wherein the cycloaliphatic epoxide has the formula:

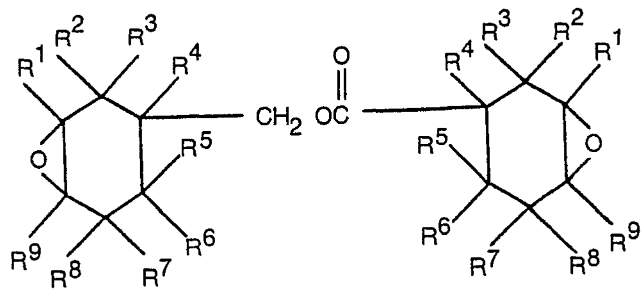

wherein $R_1$ to $R_9$, which can be the same or different are hydrogen or alkyl radicals containing 1 to 9 carbon atoms.

5. The composition of claim 1 wherein the cycloaliphatic epoxide has the formula:

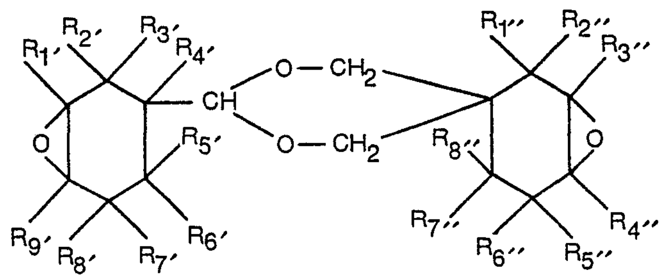

wherein the R groups and the same or different and are monovalent substituents or monovalent hydrocarbon radicals.

6. The composition of claim 1 wherein the cycloaliphatic epoxide is 3,4-epoxycyclohexylmethyl-3,4-epoxy-cyclohexane carboxylate or bis(3,4-epoxycyclohexylmethyl)-adipate or 2-(3,4-epoxycyclohexyl-5,5-spiro-3,4-epoxy)cyclohexane-meta-dioxane or a mixture of bis(3,4-epoxycyclohexylmethyl)adipate and 2-(3,4-epoxycyclohexyl-5,5-spiro-3,4-epoxy)cyclohexane-meta-dioxane.

7. The composition of claims 1 to 6 wherein the hardener is selected from phenolic hardeners having at least two phenolic hydroxyl groups, polybasic acids having at least two carboxylic acid groups per molecule and anhydrides of such polybasic acids.

**Patentansprüche**

1. Härtbare einphasige Masse, enthaltend ein cycloaliphatisches Epoxid mit im Mittel mehr als einer vicinalen Epoxygruppe je Molekül und 10 bis 25 Gew.-% — bezogen auf das Gesamtgewicht der Masse — eines Polyols, welches ein Propylenoxid-Addukt von Polyhydroxyalkanen der Formel

$$R_{10}[-O(-CH_2-\underset{\displaystyle CH_3}{\underset{|}{CH}}-O)_{\overline{n}}H]_3$$

ist, worin $R_{10}$ eine Alkylgruppe mit 3 bis 10 Kohlenstoffatomen und n eine ganze Zahl von 4 bis 25 ist, mit einem Molekulargewicht von 1 000 bis 4 000.

2. Masse nach Anspruch 1, worin $R_{10}$ Propyl ist.

3. Masse nach Anspruch 1 oder 2, worin das cycloaliphatische Epoxid der Formel:

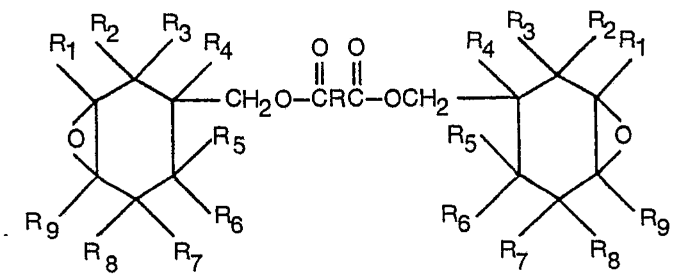

entspricht, worin $R_1$ bis $R_9$ gleich oder unterschiedlich sein können und ein Wasserstoffatom oder eine Alkylgruppe mit 1 bis 9 Kohlenstoffatomen bedeuten und R eine einfache Bindung oder eine zweiwertige Kohlenwasserstoffgruppe mit 1 bis 9 Kohlenstoffatomen ist.

4. Masse nach Anspruch 1, worin das cycloaliphatische Epoxid der Formel:

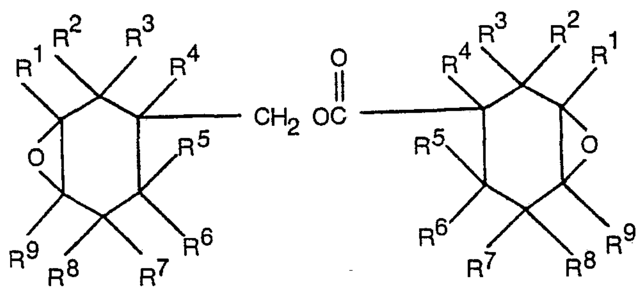

entspricht, worin $R_1$ bis $R_9$ gleich oder unterschiedlich sein können und ein Wasserstoffatom oder eine Alkylgruppe mit 1 bis 9 Kohlenstoffatomen bedeuten.

5. Masse nach Anspruch 1, worin das cycloaliphatische Epoxid der Formel:

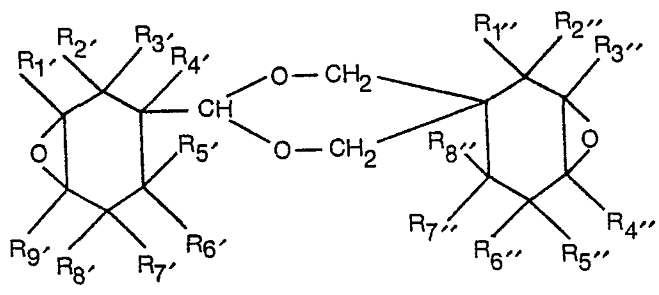

entspricht, worin die Gruppen R gleich oder unterschiedlich sein können und einwertige Substituenten oder Kohlenwasserstoffgruppen bedeuten.

6. Masse nach Anspruch 1, worin das cycloaliphatische Epoxid 3,4-Epoxycyclohexylmethyl-3,4-epoxycyclohexancarboxylat oder Bis(3,4-epoxycyclohexylmethyl)-adipat oder 2-(3,4-Epoxycyclohexyl-5,5-spiro-3,4-epoxy)cyclohexan-meta-dioxan oder ein Gemisch von Bis(3,4-epoxycyclohexylmethyl)adipat und 2-(3,4-Epoxycyclohexyl-5,5-spiro-3,4-epoxy)cyclohexan-meta-dioxan ist.

7. Masse nach Anspruch 1 bis 6, in der der Härter ein phenolischer mit zumindest zwei phenolischen Hydroxylgruppen, eine mehrbasische Säure mit zumindest zwei Carbonsäuregruppen je Molekül oder deren Anhydrid sein kann.

**Revendications**

1. Composition durcissable à une seule phase, comprenant un époxyde cycloaliphatique ayant en moyenne plus de 1 groupe époxy vicinal par molécule et 10 à 25% en poids, sur la base du poids total de la composition, d'un polyol constitué par le produit d'addition d'oxyde de propylène et de polyhydroxyalcanes de formule:

$$R_{10}[-O-(CH_2-\underset{CH_3}{\underset{|}{CH}}-O)_nH]_3$$

dans laquelle $R_{10}$ est un groupe alkyle de 3 à 10 atomes de carbone et n est un nombre entier de 4 à 25, et ayant un poids moléculaire de 1000 à 4000.

2. Composition suivant la revendication 1, dans laquelle $R_{10}$ est un groupe propyle.

3. Composition suivant la revendication 1 ou 2, dans laquelle l'époxyde cycloaliphatique répond à la formule:

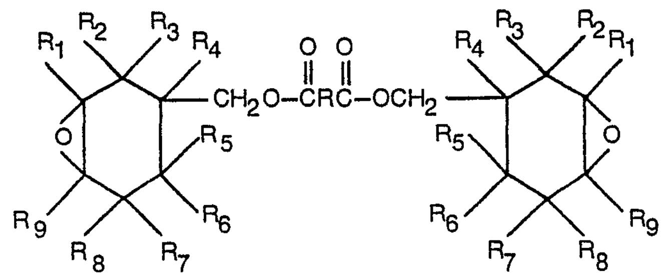

dans laquelle $R_1$ à $R_9$, qui peuvent être identiques ou différents, représentent l'hydrogène ou des radicaux alkyle contenant 1 à 9 atomes de carbone; R est une liaison de valence ou un radical hydrocarboné divalent contenant 1 à 9 atomes de carbone.

4. Composition suivant la revendication 1, dans laquelle l'époxyde cycloaliphatique répond à la formule:

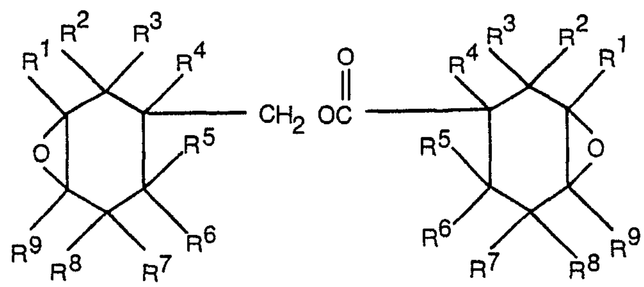

dans laquelle $R_1$ à $R_9$, qui peuvent être identiques ou différents, représentent l'hydrogène ou des radicaux alkyle contenant 1 à 9 atomes de carbone.

5. Composition suivant la revendication 1, dans laquelle l'époxyde cycloaliphatique répond à la formule:

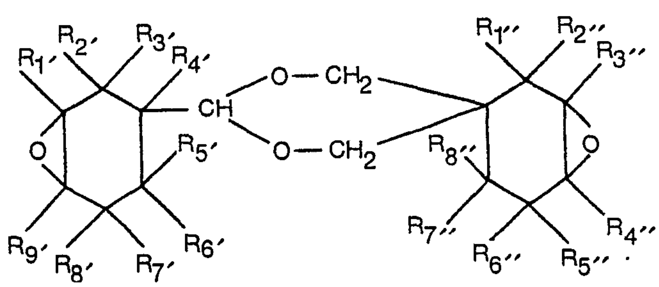

dans laquelle les groupes R, qui peuvent être identiques ou différents, représentent des substituants monovalents ou des radicaux hydrocarbonés monovalents.

6. Composition suivant la revendication 1, dans laquelle l'époxyde cycloaliphatique est le 3,4-époxycyclohexane-carboxylate de 3,4-époxycyclohexylméthyle, l'adipate de bis(3,4-époxycyclohexylméthyle) ou le 2-(3,4-époxycyclohexyl-5,5-spiro-3,4-époxy)cyclohexane-métadioxanne ou un mélange d'adipate de bis(3,4-époxycyclohexylméthyle) et de 2-(3,4-époxycyclohexyl-5,5-spiro-3,4-époxy)cyclohexane-métadioxanne.

7. Composition suivant les revendications 1 à 6, dans laquelle le durcisseur est choisi entre des durcisseurs phénoliques ayant au moins deux groupes hydroxyle phénoliques, des acides polybasiques ayant au moins deux groupes acide carboxylique par molécule et des anhydrides de ces acides polybasiques.